Europäisches Patentamt

European Patent Office

Office européen des brevets

(19)

(11) Veröffentlichungsnummer : **0 592 927 B1**

(12)

# EUROPÄISCHE PATENTSCHRIFT

(45) Veröffentlichungstag der Patentschrift :
26.07.95 Patentblatt 95/30

(51) Int. Cl.⁶ : **H02H 7/085**

(21) Anmeldenummer : **93116097.2**

(22) Anmeldetag : **05.10.93**

(54) **Steuerungsverfahren zur Begrenzung der Antriebskraft eines Antriebs, insbesondere eines Tür- oder Drehflügelantriebs sowie zugehörige Sicherheitsschaltung.**

(30) Priorität : **13.10.92 DE 4234501**

(43) Veröffentlichungstag der Anmeldung :
**20.04.94 Patentblatt 94/16**

(45) Bekanntmachung des Hinweises auf die Patenterteilung :
**26.07.95 Patentblatt 95/30**

(84) Benannte Vertragsstaaten :
**AT BE CH DE DK FR GB IT LI NL SE**

(56) Entgegenhaltungen :
**DE-U- 9 011 262**

(73) Patentinhaber : **AG FÜR TÜRAUTOMATION**
**Allmendstrasse 24**
**CH-8320 Fehraltorf (CH)**

(72) Erfinder : **Bürgi, Daniel**
**Chalet Hasenstrick**
**CH-8342 Wernetshausen (CH)**

(74) Vertreter : **Flach, Dieter Rolf Paul, Dipl.-Phys. et al**
**Patentanwälte**
**Andrae/Flach/Haug/Kneissl**
**Prinzregentenstrasse 24**
**D-83022 Rosenheim (DE)**

EP 0 592 927 B1

**Beschreibung**

Die Erfindung betrifft ein Steuerungsverfahren zur Begrenzung der Antriebskraft eines Antriebs, insbesondere eines Tür- oder Drehflügelantriebs, nach dem Oberbegriff des Anspruches 1 oder 2 sowie eine zugehörige Sicherheitsschaltung nach dem Oberbegriff des Anspruches 3.

Türeinrichtungen, die sich beim Nähern automatisch öffnen und dann wieder schließen, werden immer häufiger in öffentlichen Gebäuden und Einrichtungen sowie in Firmen eingesetzt. Durch eine im Türbereich installierte Sensorik kann festgestellt werden, ob sich eine oder mehrere Personen der Tür nähern. Hierüber wird eine Steuerungsschaltung zum Antrieb eines Elektromotors aktiviert, worüber in der Regel über ein nachgeordnetes Getriebe die Tür in ihrer Öffnungsstellung verstellt, bei einem Drehflügelantrieb verschwenkt wird. Verläßt die eine oder verlassen die mehreren Personen den Überwachungs- und Erfassungsraum vor oder nach der Tür, wird diese wieder automatisch geschlossen.

Für derartige Türen bestehen natürlich bestimmte Sicherheitsnormen und -auflagen.

Dabei ist auch verständlich, daß die Auflagen und Sicherheitsmaßnahmen bei Antriebseinrichtungen im allgemeinen und bei automatischen Türöffnungsanlagen im besonderen in Abhängigkeit von den Antriebsleistungen sehr unterschiedlich sind. Steigen beispielsweise die zum Antrieb einer automatisch zu öffnenden Tür zur Verfügung gestellten und aufgebrachten Kräfte über bestimmte Werte hinaus an, beispielsweise über 150 Newton, so verlangen die hierfür national wie international gültigen Normen und Richtlinien, daß entsprechend umfassendere Sicherheitsmaßnahmen vorgesehen und installiert werden müssen, um beim Ausfall von Baugruppen oder Fehlschaltung auf jeden Fall eine ernstliche Verletzung von Personen zu unterbinden. Die Gefahr von Quetschungen und Prellungen im Öffnungs- und Schließbereich der Tür wäre ansonsten zu groß.

Nun kann natürlich beispielsweise bei einem Drehflügelantrieb daran gedacht werden, dessen Antriebskraft auf einen bestimmten als maximal empfundenen Wert von beispielsweise 150 Newton zu begrenzen, um gefährlich werdende Verletzungen stets zu vermeiden. Bei Verwendung eines Gleichstrom-Elektromotors kann beispielsweise durch Messung und Erfassung der Stromstärke jeweils das aktuell wirksame Drehmoment ermittelt und beispielsweise durch eine nachfolgende Auswertelektronik auf einen vorgewählten Wert begrenzt werden. Möglich ist ebenso, daß bei Überschreiten des vorgewählten maximalen Wertes für die Antriebskraft sogar die gesamte Antriebseinheit, also insbesondere der Elektromotor abgeschaltet wird. Würde aber bei einer derartigen Steuerungsschaltung beispielsweise eine Komponente insbesondere die Auswertelektronik ausfallen oder beispielsweise Fehler bei der Stromstärke-Messung oder bei sonstigen Komponenten auftreten, so ist die Wahrscheinlichkeit einer Fehlschaltung noch nicht ausreichend gering. In einem derartigen Fall ist also die Wahrscheinlichkeit immer noch zu groß, daß im Falle einer Fehlschaltung zu hohe Antriebskräfte oder Drehmomente erzeugt werden, um beispielsweise im Falle eines Tür-, Drehflügel- oder Karusselltürantriebes zu hohe Kräfte und Drehmomente auftreten, die im Falle unglücklicher Konstellationen zur Gefährdung der Unversehrtheit und Gesundheit von Personen führen kann.

Aufgabe der vorliegenden Erfindung ist es von daher ein Steuerverfahren zur Begrenzung der Antriebskraft eines Antriebs, insbesondere eines Tür- oder Drehflügelantriebs und eine zugehörige Sicherheitsschaltung zu schaffen, die einfach und damit kostengünstig aufgebaut ist, wobei gewährleistet ist, daß die Wahrscheinlichkeit gleich Null oder fast gleich Null ist, daß die insgesamt erzeugten und auftretenden Kräfte und Drehmomente bei der zu bewegenden Einheit, insbesondere Tür oder des Drehflügelantriebes einen voreingestellten oder vorwählbaren maximalen Grenzwert überschreitet.

Die Aufgabe wird bezüglich des Steuerverfahrens gemäß den im Anspruch 1 oder 2 und bezüglich der zugehörigen Steuervorrichtung entsprechend den im Anspruch 3 wiedergegebenen Merkmalen gelöst. Vorteilhafte Ausgestaltungen der Erfindung sind in den Unteransprüchen angegeben.

Durch die vorliegende Erfindung wird ein divergent-redundantes System vorgeschlagen, um bei Fehlschaltung oder Ausfall von bestimmten Komponenten eine Beschränkung auf einen maximalen Wert für die auftretenden Kräfte und Drehmomente sicher vorzunehmen oder bevorzugt die gesamte Antriebseinheit abzuschalten.

Erfindungsgemäß wird dabei weiterhin zur Bestimmung der auftretenden Kräfte und Drehmomente der Wert für die Stromstärke des Elektromotors herangezogen, um darüber das von ihm erzeugte Drehmoment zu bestimmen. Über die Stromstärke des Elektromotors können natürlich auch die über ein gegebenenfalls nachgeschaltetes Getriebe an einer Schiebe- oder Drehflügeltür auftretenden Kräfte oder Drehmomente ermittelt werden.

Unabhängig von dieser ersten Art der Berechnung wird aber nunmehr vorzugsweise in einer zweiten Auswert- und Steuerungsschaltung die auftretenden Antriebskräfte bzw. Drehmomente nochmals berechnet, und zwar unter Heranziehung der Motorkennlinie bzw. des Motorkennlinien-Feldes des Elektromotors. Unter Heranziehung des entsprechenden Stell- oder Einstellwertes für die gewählte Teil- oder Vollast kann unter Berücksichtigung der Drehzahl des Elektromotors aus dem Kennlinienfeld ebenfalls vom Elektromotor erzeugte Drehmoment ermittelt werden.

Mittels einer Verknüpfungsschaltung kann dann gewährleistet werden, daß beim Ausfall des einen Pfads zur Ermittlung der in seiner Höhe begrenzten Antriebskräfte bzw. Drehmomente dies von der jeweils weiteren Auswertelektronik erkannt wird. Hierüber kann bevorzugt eine Gesamtabschaltung der Antriebseinheit erfolgen oder zumindest eine Beschränkung auf den niedrigeren Wert. Möglich ist alternativ oder ergänzend, daß neben der Abschaltung oder Unterbrechung beispielsweise des Motors unter der Beschränkung der Antriebskräfte auf einen niedrigeren Wert auch andere Sicherheitsschaltungen aktiviert werden. Unabhängig von der gewünschten Sicherheitsschaltung als Folge der auftretenden Störung liegt der Kern der Erfindung in dem redundanten System zur "Erkennung" eines Fehlers.

Bevorzugt sind beide Auswert- und Steuerschaltungen jeweils zur Ermittlung der Antriebskräfte bzw. Drehmomente unabhängig voneinander. Ein Vergleich der ermittelten Werte kann über eine Komperatorschaltung oder über eine direkte Schnittstelle mit den beiden Mikroprozessor gesteuerten Einheiten erfolgen.

Bevorzugt ist jeder Auswert- und Steuerungsschaltung zur unabhängigen Ermittlung der Antriebskräfte bzw. der Drehmomente eine separate Trennstufe nachgeschaltet. Sobald eine der beiden Trennstufen abschaltet wird die gesamte Antriebseinheit, insbesondere der Elektromotor abgeschaltet. Möglich ist auch eine Parallelschaltung der beiden Trennstufen, wenn diese über eine UND-Verknüpfung miteinander verknüpft werden.

Weitere Vorteile, Einzelheiten und Merkmale der Erfindung ergeben sich nachfolgend aus dem anhand von Zeichnungen dargestellten Ausführungsbeispiel. Dabei zeigen im einzelnen

Figur 1 :     ein Blockschema der Sicherheitsschaltung mit einer redundanten Drehmomentberechnung;

Figur 2 :     die Darstellung eines Motordrehmoments in Abhängigkeit der Drehzahl und des Stellwertes (Leistungswertes) für einen Gleichstrom-Elektromotor;

Figur 3 :     die Darstellung der Motorkennlinie in Abhängigkeit der Drehzahl bei voller Aussteuerung (Vollast) bei einer Gleichstrom-Motor-Temperatur von 20°, 60° sowie 100°.

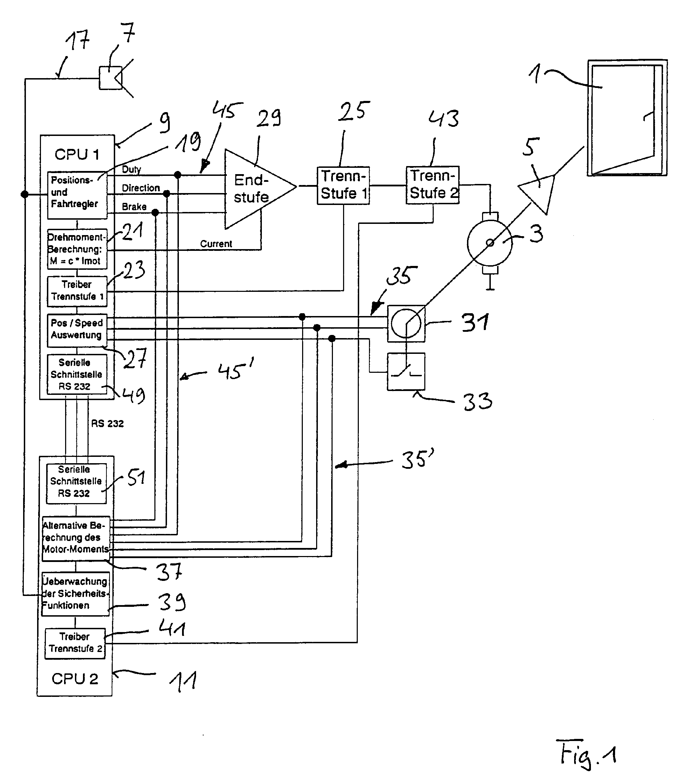

In Figur 1 ist in schematischer Darstellung ein Blockschema einer Sicherheitsschaltung erläutert.

Im gezeigten Ausführungsbeispiel dient sie zum Antrieb und zur Überwachung einer Tür 1, d. h. im besonderen einer Drehflügeltür 1.

Die Antriebseinheit umfaßt unter anderem einen Gleichstrom-Elektro-Motor 3 und ein nachgeschaltetes Getriebe 5, worüber die Tür in Öffnungs- und Verschlußstellung verschwenkt werden kann.

Die Öffnungs- und Schließbewegung der Tür 1 wird über eine Tür-Sensorik 7 überwacht und gesteuert, über die eine erste Auswert- und Steuerungsschaltung 9 und eine zweite Auswert- und Steuerungsschaltung 11 angesteuert wird.

Jede der beiden Auswert- und Steuerschaltungen 9, 11 umfaßt eine Mikroprozessoreinheit CPU 1 bzw. CPU 2, die unabhängig voneinander arbeiten. Beim Ausfall einer der beiden Einheiten oder einer Komponente auf einer Einheit kann jeweils die andere Mikroprozessoreinheit CPU 1, CPU 2 unabhängig davon arbeiten.

Die Tür-Sensorik 7 steht also über eine Leitung oder Bus 17 und eine nachgeschaltete Verzweigungsstelle mit den beiden Mikroprozessoreinheiten CPU 1 und CPU 2 in Verbindung.

Die erste Auswert- und Steuerungsschaltung 9 umfaßt einen Positions- und Fahrtregler 19, eine Drehmoment-Berechnungs-Einheit 21, einen Treiber 23 für die der ersten Auswert- und Steuerungsschaltung 9, d. h. der ersten Mikroprozessoreinheit CPU 1 zugeordneten ersten Trennstufe 25 sowie eine Positions-/Geschwindigkeit-Auswertstufe 27.

Diese erste Auswert- und Steuerungsschaltung arbeitet wie folgt.

Nähert sich eine oder nähern sich beispielsweise mehrere Personen der Tür 1, so wird dies über die Tür-Sensorik 7 erfaßt und neben der zweiten auch die erste Auswert- und Steuerungsschaltung 9 in Gang gesetzt. Über den Positions- und Fahrtregler 19 werden laufend die neuen Stellwerte für eine ihm nachgeordnete Endstufe 29 anhand der Auslösesignale, Sicherheitssignale, der aktuellen Position und Geschwindigkeit und anhand des Motor-Drehmomentes berechnet. Am Ausgang des Positions- und Fahrtreglers 19, d. h. am Ausgang der ersten Mikroprozessoreinheit CPU 1 werden also die entsprechenden Signale für die Leistung (Last = Duty), die Öffnungsrichtung (Direction) oder einer Bewegungsbremse (Brake) ermittelt, die der Endstufe 29 zum Antrieb des Elektromotors 3 zugeführt werden.

Zur Ermittlung des Drehmomentes könnte ein Strommeßgerät für den Elektromotor zugeschaltet sein. Im beschriebenen Ausführungsbeispiel jedoch wird der aktuelle Stromwert für den Elektromotor durch die Endstufe 29 direkt geliefert und der Drehmoment-Berechnungseinheit 21 zur Berechnung des Drehmomentes

$$M = c \times I_{Mot}$$

zugeführt, wobei c einen konstanten Wert darstellt.

Schließlich ist auch noch eine Geber-Einheit 31 zur Bestimmung der Relativlagenveränderung, also der Antriebsrichtung sowie der Drehzahl des Motors n (oder des nachgeordneten Getriebes) sowie ein Absolut-

3

Positions-Geber 33 vorgesehen, wobei über die Leitung oder den Bus 35 von der Gebereinheit 31 die Werte für die Antriebsrichtung und die Drehzahl und über die dritte Leitung die Werte für die Absolutposition vom Absolut-Positions-Geber 33 zur Positions-/Geschwindigkeits-Auswertstufe 27 weitergegeben werden.

Unter Verarbeitung der wenigen Größen wird also über den Positions- und Fahrtregler 19 über die ihm nachgeschaltete Endstufe 29 die den Elektromotor umfassende Antriebseinheit und damit die Tür 1 angesteuert und bewegt.

Aufgrund der in der CPU 1 abgespeicherten Werte für die maximal gewünschten Antriebskräfte bzw. Drehmomente , mit denen die Tür 1 bewegt wird, wird eine entsprechende Leistungsbegrenzung und damit Strombegrenzung für den Elektromotor gesteuert.

Sollte die Steuerungsschaltung auf der Mikroprozessoreinheit CPU 1 ein fehlerhaftes Überschreiten der voreingestellten maximalen Antriebs- oder Drehmomentwerte erkennen, so kann über den Treiber 23 die ihm nachgeschaltete Trennstufe 1 aktiviert werden, worüber die Endestufe 29 vom Elektromotor 3 entkoppelt und damit den Elektromotor und die gesamte Antriebseinheit zur Bewegung der Tür stillgesetzt wird. Die Steuerung erfolgt insoweit entsprechend bekannter Steuerungsvorrichtungen. Auch vom Ausführungsbeispiel abweichende Schaltungen sind insoweit verwendbar, auf die verwiesen wird.

Sollte jedoch durch Ausfall bestimmter Komponenten ein Ansteigen der Antriebskräfte und Drehmomente über einen voreingestellten oder vorwählbaren Wert hinaus durch die Mikroprozessoreinheit CPU 1 nicht erkannt werden, so kann eine Leistungsbegrenzung oder bevorzugt eine Abschaltung durch die redundante Schaltungsanordnung auf Grund der zweiten Mikroprozessoreinheit CPU 2 erfolgen. Das gleiche gilt natürlich umgekehrt bei einer Störung oder einem Ausfall der Zweiten Mikroprozessoreinheit CPU 2. Eine Abschaltung des gesamten Antriebsystems kann dann durch Erkennung der Störung oder des Ausfalls mittels der ersten Prozessoreinheit CPU 1 erfolgen.

Die zweite Mikroprozessoreinheit CPU 2, die getrennt von der ersten ausgebildet ist und einen eigenständig arbeitenden Mikroprozessor aufweist, umfaßt beispielsweise eine Berechnungseinheit 37 zur alternativen Berechnung des Motor-Momentes, eine Überwachungseinheit 39 zur Überwachung der Sicherheitsfunktion und einen Treiber 41 zur Aktivierung der dem Treiber 41 zugeschalteten zweiten Trennstufe 43.

Der alternativen Berechnungseinheit 37 zur Berechnung des Motor-Drehmomentes werden jedenfalls die möglichen drei Signale für die Leistung (Duty, Last), die Antriebsrichtung (Direction) sowie einer möglichen Bremsung (Brake) der Antriebseinheit und damit der Tür über eine von der Leitung oder dem Bus 45 abzweigenden Zweigleitung oder Zweigbus 45′ und die entsprechenden Signale für die Antriebsrichtung, die Drehzahl von der Gebereinheit 31 sowie die Absolutpositions-Daten vom Absolut-Positions-Geber 33 ebenfalls über eine Zweigleitung 35′ (Leitungsbus) zugeführt.

Die Überwachungseinheit 39 zur Überwachung der Sicherheits-Funktionen überwacht den Türbewegungsablauf hinsichtlich seiner Reaktion auf Sicherheitssensoren, Drehmomente und Hindernissen im Schwenkbereich. Auch hierübe können gegebenenfalls Sicherheitsreaktionen ausgelöst werden.

Wichtig ist jedoch, daß die alternative Berechnung des Motor-Drehmomentes in der Berechnungseinheit 37 nach einer von der Berechnungsmethode in der ersten Mikroprozessoreinheit CPU 1 abweichenden Methode erfolgt.

Während in der ersten Mikroprozessoreinheit CPU 1 das durch den Gleichstrom-Elektro-Motor erzeugte Drehmoment aus dem betreffenden Wert der Stromstärke ermittelt, wird im Falle der zweiten Mikroprozessoreinheit CPU 2 das Drehmoment aus dem entsprechenden Motor-Kennlinienfel ermittelt.

In Figur 2 ist beispielsweise das Kennlinienfeld, also die Darstellung des Motordrehmoments M in Abhängigkeit der Drehzahl n und des (Leistungs-) Stellwertes wiedergegeben.

Um im folgenden das Kennlinienfeld in einer mathematischen Funktion erfassen zu können, werden für einen bestimmten Motor beispielsweise die folgenden Definitionen oder Werte angegeben:

$n_{max}$ = 2200         maximale Drehzahl in U/min
$n$ = 0 ... $n_{max}$        Dynamik der Drehzahl
$duty_{max}$ = 100 %      maximaler Stellwert (= voll ausgesteuert) = Vollast
$duty$ = 0 .. $duty_{max}$     Dynamik des Stellwertes (0 .. 50) aktueller Stellwert = Teillast
$M_{max}$ = 0.672        Motormoment bei voller Aussteuerung
$M$ = 0 ... $M_{max}$       Dynamik des Motormomentes

$$n\,(M,\,duty) = \left[\frac{duty}{duty_{max}} - \frac{M}{M_{max}}\right] \cdot n_{max}$$

Motordrehzahl in Abhängigkeit von Stellwert- und Drehmoment

4

Dabei stellt "duty$_{max}$" den maximalen Stellwert für"Vollast" dar. Natürlich kann der Stell- und Aussteuerungswert auch runtergeregelt werden, so daß nur im Teillastbetrieb gearbeitet wird. Im gezeigten Ausführungsbeispiel beträgt der Stellwert für Vollast "duty = 100%", bei welchem bei gegebener Drehzahl das maximale Drehmoment erzeugt wird.

Entsprechend der Dynamik der Drehzahl

$$n = 0 \ldots n_{max}$$

läßt sich das Motordrehmoment aus der Drehzahl und dem Stellwert (Duty) wie folgt bestimmen

$$M_{mot}\ (n,\ duty)\ =\ M_{max} \cdot \left[ \frac{duty}{duty_{max}} - \frac{n}{n_{max}} \right]$$

Diese Formel erlaubt es nun, das Drehmoment zu berechnen ohne den Motorstrom zu kennen. Wie allerdings aus Figur 2 hervorgeht, ist beim praktischen Gebrauch die Begrenzung des Drehmoments bedingt durch die Leistungsfähigkeit der verwandten Endstufe mit zu berücksichtigen, so daß die mathematische Erfassung für $M_{eff} \leqq M_{System}$

$$M_{meff}\ (n,\ duty)\ =\ M_{max} \cdot \left[ \frac{duty}{duty_{max}} - \frac{n}{n_{max}} \right]$$

und für $M_{eff} > M_{System}$

$$M_{eff}\ (n,\ duty)\ =\ M_{System}$$

vollständig lautet. Dabei ist $M_{System}$ das maximale vom System erreichbare Drehmoment.

Dabei erhält die alternative Berechnungseinheit 37 den Stellwert für Voll- oder Teillastbetrieb "Duty" über die Zweigleitung 45′ des Positions- und Fahrtreglers 19 von der ersten Mikroprozessoreinheit CPU 1 und die Elektromotor-Drehzahl von der Gebereinheit 31 über die Zweigleitung 35′.

Solange beide Auswert- und Steuerschaltungen 9, 11 also beide Mikroprozessoreinheiten CPU 1 bzw. CPU 2 einen gleichen unterhalb eines voreingestellten oder vorwählbaren maximalen Wert für die Antriebskräfte oder das Drehmoment gewählten Wert nicht überschreiten, ist die zur Endstufe 29 in Reihe geschaltete erste und zweite Trennstufe 25 und 43 nicht aktiviert, so daß der Elektromotor 3 entsprechend angesteuert und die Tür geschlossen oder geöffnet wird. Erkennt bereits eine der Auswert- und Steuerschaltungen 9, daß ein eingestellter maximaler Grenzwert für die Antriebskraft oder das Drehmoment überschritten wird, wird die entsprechend zugeordnete Trennstufe 25 bzw. 43 aktiviert und die Antriebseinheit, d. h. der Motor von der Endstufe entkoppelt und stillgesetzt.

Sollte aber ein vorgewählter oder eingestellter maximaler Grenzwert für die Antriebskräfte des Drehmoments überschritten werden, ohne daß dies durch die entsprechende Mikroprozessoreinheit CPU 1 bzw. CPU 2 erkannt wird, so ist hierfür ein Datenaustausch über jeweils eine der jeweiligen Mikroprozessoreinheiten zugeordneten Schnittstelle, im gezeigten Ausführungsbeispiel einer seriellen Schnittstelle 49 bzw. 51 vorgesehen. Sobald hierüber jeweils zumindest eine der beiden Mikroprozessoreinheiten CPU 1 bzw. CPU 2 erkennt, daß die ermittelten Werte voneinander abweichen bzw. die Abweichung ein bestimmtes vorwählbares Maß übersteigt, so kann die jeweilige Abschaltung der zugeordneten ersten oder zweiten Trennstufe aktiviert werden.

Durch diese redundante Schaltung wird gewährleistet, daß selbst bei Ausfall einer Mikroprozessoreinheit und bei dadurch gegebenenfalls nicht erkannter Ansteuerung des Elektromotors und Erzeugung zu hoher Antriebskräfte oder Drehmomente über die jeweils zweite Mikroprozessoreinheit gleichwohl eine Abschaltung der gesamten Antriebseinheit erfolgt. Möglich wäre auch in einem derartigen Fall eine Aktivierung einer Strombegrenzungsschaltung oder ein Herunterregeln derart, daß die in ihrem Wert voneinander abweichenden unabhängig voneinander ermittelten Drehmomentwerte auf jeden Fall beide unter einem vorwählbaren oder voreingestellten Drehmomentwert liegen. Gleichzeitig müßte in diesem Fall eine Warnfunktion in Gang gesetzt werden, die anzeigt, daß eine Überprüfung der gesamten Anlage erforderlich ist.

Im gezeigten Ausführungsbeispiel sind die beiden Trennstufen in Reihe hintereinander geschaltet, so daß bei Aktivierung bereits einer Trennstufe eine gesamte Stillsetzung des Antriebs erfolgt. Möglich wäre aber auch die Parallelschaltung beider Trennstufen und eine entsprechende Verknüpfung beispielsweise über eine UND-Schaltung.

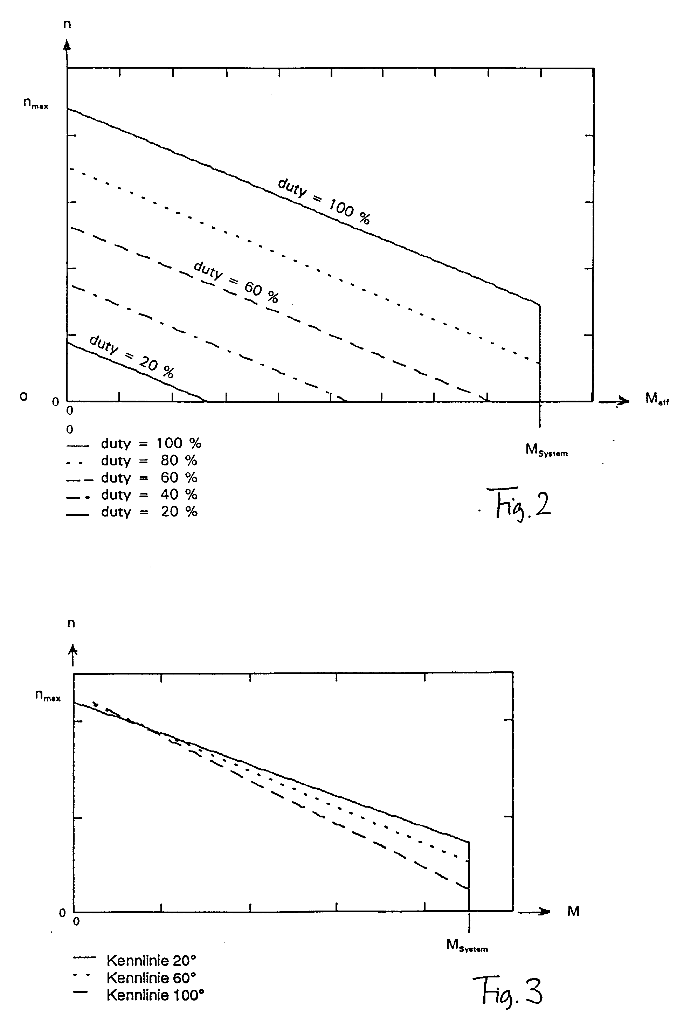

Nachfolgend wird noch unter Bezugnahme auf Figur 3 auf die Genauigkeit und die möglichen Abweichungen im Betrieb der Sicherheitsvorrichtung an dem Beispiel eines Vollastbetriebes (also bei voller Aussteuerung; Duty = 100% im gezeigten Ausführungsbeispiel) erläutert.

Es ist nämlich zu beachten, daß auch die Drehmoment-Berechnung basierend auf der Strommessung bei veränderter Temperatur mit einem gewissen Fehler behaftet ist. Ebenso ändert sich die Stromkennlinie in Abhängigkeit der Motortemperatur. Von daher verschiebt sich die Kennlinie des Gleichstrommotors mit der sich ändernden Temperatur. Die gezeigte Berechnungsmethode für das Motordrehmoment stimmt also nur bei einer bestimmten Temperatur exakt. Davon ausgehend, daß sich die Motor-Wicklungstemperatur zwischen 20°C und 100°C bewegt ist es sinnvoll, als Berechnungsgrundlage die 60°-Kennlinie zu wählen. Damit ist der Berechnungsfehler im Normal-Betriebsfall vernachlässigbar klein. Bei sehr kaltem und sehr warmen Motor ergeben sich die in der angefügten Tabelle wiedergegebenen Abweichungen.

Setzt man die Werte für eine maximale Abweichung bei 20°C und 100°C ins Verhältnis, so ergibt sich

$$\Delta = 1 - 1 \cdot \frac{M_{eff20}}{M_{eff60}} \qquad \Delta = -12,45\%$$

Somit beträgt also die Abweichung ca. 6 %. Die Differenz der herkömmlichen Bestimmung des Motordrehmomentes durch Messung des Motorstromes gegenüber der oben beschriebenen Methode liegt also unterhalb 10 %.

# TABELLE

## bezüglich Eckdaten des Elektro-Motors bei unter-
## schiedlichen Betriebstemperaturen

Eckdaten des Motors mit 20°:  $M_{max20} := 0.67$   $n_{max20} := 2200$

Eckdaten des Motors mit 60°:  $M_{max60} := 0.585$   $n_{max60} := 2250$

Eckdaten des Motors mit 100°:  $M_{max100} := 0.50$   $n_{max100} := 2300$

Kennlinie des Motors mit 20°:

$$M_{mot20}(n,duty) := M_{max20} \cdot \left[ \frac{duty}{duty_{max}} - \frac{n}{n_{max20}} \right]$$

$$M_{eff20}(n,duty) := if\left[ M_{mot20}(n,duty) \leq 0.45, M_{mot20}(n,duty), 0.45 \right]$$

Kennlinie des Motors mit 60°:

$$M_{mot60}(n,duty) := M_{max60} \cdot \left[ \frac{duty}{duty_{max}} - \frac{n}{n_{max60}} \right]$$

$$M_{eff60}(n,duty) := if\left[ M_{mot60}(n,duty) \leq 0.45, M_{mot60}(n,duty), 0.45 \right]$$

Kennlinie des Motors mit 100°:

$$M_{mot100}(n,duty) := M_{max100} \cdot \left[ \frac{duty}{duty_{max}} - \frac{n}{n_{max100}} \right]$$

$$M_{eff100}(n,duty) := if\left[ M_{mot100}(n,duty) \leq 0.45, M_{mot100}(n,duty), 0.45 \right]$$

## Patentansprüche

1. Steuerungsverfahren zur Begrenzung der Antriebskraft eines Türantriebs, insbesondere Drehflügelantriebes oder dergleichen, bei welchem unter Verwendung eines Gleichstrom-Elektromotors unter Verarbeitung des Wertes für die Stromstärke zum Antrieb des Elektromotors das Drehmoment bestimmt und gegebenenfalls mit einer Strombegrenzungsschaltung auf einen Wert unterhalb eines maximalen Wertes geregelt wird, **dadurch gekennzeichnet,** daß zur Erzielung einer redundanten Sicherheitsfunktion das Drehmoment des Elektromotors nochmals ermittelt wird, und zwar aus dem Elektromotor-Kennlinienfeld unter Heranziehung der Drehzahl sowie des Stellwertes für Voll- oder Teillastbetrieb, und daß die Antriebseinheit stillgesetzt, unterbrochen und/oder eine weitere Sicherheitsfolgeschaltung aktiviert wird, wenn die beiden unabhängig ermittelten Drehmoment-Werte voneinander abweichen oder ein bestimmtes Abweichungsmaß übersteigen.

2. Steuerungsverfahren zur Begrenzung der Antriebskraft eines Türantriebs, insbesondere Drehflügelantriebes oder dergleichen, bei welchem unter Verwendung eines Gleichstrom-Elektromotors unter Verarbeitung des Wertes für die Stromstärke zum Antrieb des Elektromotors das Drehmoment bestimmt und gegebenenfalls mit einer Strombegrenzungsschaltung auf einen Wert unterhalb eines maximalen Wertes geregelt wird, **dadurch gekennzeichnet,** daß zur Erzielung einer redundanten Sicherheitsfunktion das Drehmoment des Elektromotors nochmals ermittelt wird, und zwar aus dem Elektromotor-Kennlinienfeld unter Heranziehung der Drehzahl sowie des Stellwertes für Voll- oder Teillastbetrieb, und daß zumindest bei über ein vorbestimmtes Maß hinaus gehender Abweichung der unabhängig voneinander ermittelten Werte für das erzeugte Drehmoment der Wert für die Stromstärke für den Antrieb des Elektromotors so geregelt wird, daß der von den beiden jeweils höher ermittelte Wert für das Drehmoment unterhalb eines vorgegebenen oder voreinstellbaren maximalen Drehmomentwert heruntergeregelt und/oder eine weitere Sicherheitsfolgeschaltung aktiviert wird.

3. Sicherheitsschaltung zur Durchführung des Steuerungsverfahrens nach Anspruch 1 oder 2 zur Begrenzung der Antriebskraft bzw. Drehmoment eines Türantriebes, insbesondere Drehflügelantriebes oder dergleichen, mit einer Auswert- und Steuerungsschaltung (9), mit einem Gleichstrom-Elektromotor (3) für die Antriebseinheit, mit einer Meß- oder Bereitstellungsschaltung zur Ermittlung der Bereitstellung des aktuellen Wertes der Stromstärke des Elektromotors (3), mit einer Drehmoment-Berechnungseinheit (21) zur Berechnung des aktuellen Drehmomentes des Elektromotors (3), und gegebenenfalls mit einer Strombegrenzungsschaltung zur Begrenzung des erzeugbaren Drehmomentes auf einen maximalen Wert, **dadurch gekennzeichnet,** daß ferner ein redundanter zweiter Schaltungszweig mit einer zweiten Auswert- und Steuerungsschaltung (11) vorgesehen ist, die eine Berechnungseinheit (37) zur alternativen Berechnung des Elektromotor-Drehmomentes umfaßt, in welcher unter Berücksichtigung der gemessenen und ermittelten Drehzahl des Elektromotors (3) sowie des Stellwerts für Teil- oder Vollastbetrieb des Elektromotors (3) und dessen Kennlinien-Feldes das aktuelle Drehmoment ermittelbar ist, und daß eine Verknüpfungsschaltung vorgesehen ist, welche bei Abweichung der in beiden Auswert- und Steuerschaltungen (9, 11) unabhängig ermittelten Werte für das aktuelle Drehmoment des Elektromotors (3) zumindest im Falle einer Abweichung über ein vorwählbares Maß hinaus eine Sicherheitsfolgeschaltung aktiviert oder den Antrieb stillsetzt oder den Wert für die Stromstärke gegebenenfalls so hinunterregelt, daß keiner der beiden unabhängig voneinander ermittelten aktuellen Werte für die Stromstärke oberhalb eines vorgegebenen oder voreinstellbaren maximalen Stromstärkewertes liegt.

4. Sicherheitsschaltung nach Anspruch 3, **dadurch gekennzeichnet,** daß die beiden Auswert- und Steuerschaltungen (9, 11) zwei separate Mikroprozessoreinheiten (CPU 1, CPU 2) umfassen.

5. Sicherheitsschaltung nach Anspruch 3 oder 4, **dadurch gekennzeichnet,** daß jede Auswert- und Steuerschaltung (9, 11) eine separate Trennstufe (25, 43) zugeordnet ist.

6. Sicherheitsschaltung nach Anspruch 5, **dadurch gekennzeichnet,** daß beide Trennstufen (25, 43) in Reihe geschaltet sind.

7. Sicherheitsschaltung nach Anspruch 5, **dadurch gekennzeichnet,** daß beide Trennstufen (25, 43) parallel zueinander geschaltet und mittels einer UND-Schaltung miteinander verknüpft sind.

8. Sicherheitsschaltung nach einem der Ansprüche 3 bis 7, **dadurch gekennzeichnet,** daß dem Elektromotor (3) eine Endstufe (29) zur entsprechenden Stromversorgung vorgeschaltet ist, die der ersten Auswert- und Steuerschaltung (9) zugeordnet ist.

9. Sicherheitsschaltung nach einem der Ansprüche 3 bis 8, **dadurch gekennzeichnet,** daß die beiden Trennstufen (25, 43) zwischen der Endstufe (29) und dem Elektromotor (3) geschaltet sind.

10. Sicherheitsschaltung nach einem der Ansprüche 3 bis 9, **dadurch gekennzeichnet,** daß die Verknüpfungsschaltung einen Datenbus zwischen den beiden Auswert- und Steuerschaltungen (9, 11) umfaßt.

**11.** Sicherheitsschaltung nach einem der Ansprüche 3 bis 10, **dadurch gekennzeichnet,** daß beide Auswert- und Steuerschaltungen (9, 11) über eine Schnittstelle, vorzugsweise eine serielle Schnittstelle (49, 51) miteinander verbunden sind.

**12.** Sicherheitsschaltung nach Anspruch 11, **dadurch gekennzeichnet,** daß über die Busverbindung bzw. Schnittstelle (49, 51) zwischen den beiden Auswert- und Steuerschaltungen (9, 11) die jeweils aktuellen Werte für die unabhängig voneinander ermittelten Drehmomentwerten austauschbar sind.

**Claims**

**1.** A control method for limiting the actuating force of a door mechanism, in particular a turning sash mechanism or similar, wherein the turning moment is determined using a DC-electric motor whilst processing the value for the strength of current for the purpose of driving the electric motor and if necessary is controlled by means of a current limiting circuit to a value below a maximum value, characterised in that for the purpose of achieving a redundant security function the turning moment of the electric motor is determined once more, actually from the electric motor characteristic curve together with the rotational speed as well as the adjusting value for full or partial load operation and that the driving unit is brought to a standstill, is interrupted and/or a further security sequential circuit is activated if the two independently determined turning moment values differ from each other or a predetermined deviation value is exceeded.

**2.** A control method for limiting the actuating force of a door mechanism, in particular a turning sash mechanism or similar, wherein the turning moment is determined using a DC-electric motor whilst processing the value for the strength of current for the purpose of driving the electric motor and if necessary is controlled by means of a current limiting circuit to a value below a maximum value, characterised in that for the purpose of achieving a redundant security function the turning moment of the electric motor is determined once more, actually from the electric motor characteristic curve together with the rotational speed as well as the adjusting value for full or partial load operation and that at least in the case of the deviation of the independently determined values for the produced turning moment exceeding a predetermined value, the value for the strength of current for the purpose of driving the electric motor is controlled is such a manner that the higher value of the two values determined for the turning moment is controlled downwards to within a predetermined or pre-set maximum turning moment value and/or a further security sequential circuit is activated.

**3.** A security circuit for the purpose of carrying out the control method according to claim 1 or 2 for the purpose of limiting the actuating force and turning moment of a door mechanism, in particular a turning sash mechanism or similar, having an evaluating or control circuit (9), having a DC-electric motor (3) for the driving unit, having a measuring or control circuit for the purpose of determining the making available of the actual value of the strength of current of the electric motor (3), having a turning moment calculating unit (21) for the purpose of calculating the actual turning moment of the electric motor (3) and if necessary having a current limiting circuit for the purpose of limiting to a maximum value the turning moment which can be produced, characterised in that moreover, a redundant second circuit branch having a second evaluating and control circuit (11) is provided, which comprises a calculating unit (37) for the purpose of alternatively calculating the electric motor turning moment, in which the actual turning moment can be determined by taking into account the measured and determined rotational speed of the electric motor (3) as well as the adjusting value for the partial or full load operation of the electric motor (3) and its characteristic curve and that a combinatorial circuit is provided, which in the case of the values for the actual turning moment of the electric motor (3), which values are determined independently in the two evaluating and control circuits (9, 11) deviating from each other, at least in the case of the deviation being in excess of a pre-selectable value, a security sequential circuit is activated or the drive is brought to a standstill or the value for the strength of current is if necessary controlled downwards such that neither of the two actual values determined independently from each other for the strength of current lie above a predetermined or pre-set maximum value for the strength of current.

**4.** A security circuit according to claim 3, characterised in that the two evaluating and control circuits (9, 11) comprise two separate micro processing units (CPU 1, CPU 2).

**5.** A security circuit according to claim 3 or 4, characterised in that each evaluating and control circuit (9, 11) is allocated a separate separator stage (25, 43).

6. A security circuit according to claim 5, characterised in that the two separator stages (25, 43) are connected in series.

7. A security circuit according to claim 5, characterised in that the two separator stages (25, 43) are connected parallel with each other and are coupled to each other by means of an AND-circuit.

8. A security circuit according to any one of claims 3 to 7, characterised in that for the purpose of providing the relevant current an end stage (29) is connected upstream of the electric motor (3), which end stage is allocated to the evaluating and control circuit (9).

9. A security circuit according to any one of claims 3 to 8, characterised in that the two separator stages (25, 43) are connected between the end stage (29) and the electric motor (3).

10. A security circuit according to any one of claims 3 to 9, characterised in that the combinatorial circuit comprises a data bus between the two evaluating and control circuits (9, 11).

11. A security circuit according to any one of claims 3 to 10, characterised in that the two evaluating and control circuits (9, 11) are interconnected by way of an interface, preferably a serial interface (49, 51).

12. A security circuit according to claim 11, characterised in that the respective actual values for the turning moment values which are determined independently from each other can be exchanged between the two evaluating and control circuits (9, 11) by way of the bus connection and the interface (49, 51).

**Revendications**

1. Procédé de commande pour limiter la force d'entraînement d'un entraînement de porte, en particulier d'un entraînement de battant rotatif ou similaire, dans lequel, en utilisant un moteur électrique à courant continu et en traitant la valeur de l'intensité du courant pour l'entraînement du moteur électrique, le couple de rotation est déterminé et éventuellement régulé par un circuit de limitation du courant à une valeur située en dessous d'une valeur maximale, caractérisé en ce que pour obtenir une fonction de sécurité redondante, le couple de rotation du moteur électrique est déterminé encore une fois, et ce à partir du champ des caractéristiques du moteur électrique, en tenant compte de la vitesse de rotation ainsi que de la valeur de consigne pour un fonctionnement à pleine charge ou à charge partielle, et en ce que l'unité d'entraînement est arrêtée ou coupée et/ou une autre séquence de commutations de sécurité est activée si les deux valeurs, déterminées indépendamment, du couple de rotation sont différentes l'une de l'autre ou dépassent une différence d'une valeur déterminée.

2. Procédé de commande pour limiter la force d'entraînement d'un entraînement de porte, en particulier d'un entraînement de battant rotatif ou similaire, dans lequel, en utilisant un moteur électrique à courant continu et en traitant la valeur de l'intensité du courant pour l'entraînement du moteur électrique, le couple de rotation est déterminé et éventuellement régulé par un circuit de limitation du courant à une valeur située en dessous d'une valeur maximale, caractérisé en ce que pour obtenir une fonction de sécurité redondante, le couple de rotation du moteur électrique est déterminé encore une fois, et ce à partir du champ de caractéristiques du moteur électrique, en tenant compte de la vitesse de rotation ainsi que de la valeur de consigne d'un fonctionnement à pleine charge ou à charge partielle, et en ce qu'au moins dans le cas où la différence entre les valeurs du couple de rotation créé, déterminées indépendamment l'une de l'autre, dépasse une valeur prédéterminée, la valeur de l'intensité du courant pour l'entraînement du moteur électrique est régulée de telle sorte que la plus grande des deux valeurs déterminées du couple de rotation est ramenée en dessous d'une valeur maximale du couple de rotation prédéterminée ou préalablement réglée, et/ou une autre séquence de commutations de sécurité est activée.

3. Circuit de sécurité en vue de l'exécution du procédé de commande selon la revendication 1 ou 2, pour limiter la force d'entraînement ou le couple de rotation d'un entraînement de porte, en particulier d'un entraînement de battant rotatif ou similaire, avec un circuit d'évaluation et de commande (9), avec un moteur électrique à courant continu (3) pour limiter l'entraînement, avec un circuit de mesure ou de préparation en vue de la détermination de la valeur instantanée de l'intensité du courant du moteur électrique (3), avec une unité de calcul du couple de rotation (21), pour le calcul du couple de rotation instantané du moteur électrique (3), et éventuellement avec un circuit de limitation du courant, pour limiter à une valeur maximale le couple de rotation qui peut être créé, caractérisé en ce qu'est prévu en outre un second circuit redondant comportant un second circuit d'évaluation et de commande (11), et qui comprend une unité de calcul (37) pour un autre calcul du couple de rotation du moteur électrique, dans lequel le couple de rotation instantané peut être déterminé, en tenant compte de la vitesse de rotation mesurée et calculée du moteur électrique (3), de la valeur de consigne pour un fonctionnement à pleine charge ou à charge partielle du moteur électrique (3) ainsi que du champ de caractéristiques de ce dernier, et en ce qu'un circuit de combinaison est prévu qui, lorsque les deux valeurs déterminées indépendamment dans les deux circuits d'évaluation et de commande (9, 11), du couple de rotation instantané du moteur électrique (3) sont différentes, et au moins dans le cas d'une différence dépassant une valeur présélectionnable, active une séquence de commutations de sécurité ou arrête l'entraînement ou diminue éventuellement la valeur de l'intensité du courant de telle sorte qu'aucune des deux valeurs instantanées déterminées indépendamment l'une de l'autre de l'intensité du courant ne soit située au-dessus d'une valeur maximale prédéterminée ou pouvant être préalablement réglée de l'intensité du courant.

4.    Circuit de sécurité selon la revendication 3, caractérisé en ce que les deux circuits d'évaluation et de commande (9, 11) comprennent deux unités à microprocesseur séparées (CPU 1, CPU 2).

5.    Circuit de sécurité selon la revendication 3 ou 4, caractérisé en ce qu'à chaque circuit d'évaluation et de commande (9, 11) est associé un étage de séparation séparé (25, 43).

6.    Circuit de sécurité selon la revendication 5, caractérisé en ce que les deux étages de séparation (25, 43) sont branchés en série.

7.    Circuit de sécurité selon la revendication 5, caractérisé en ce que les deux étages de séparation (25, 43) sont branchés en parallèle l'un par rapport à l'autre et sont associés l'un à l'autre au moyen d'un circuit ET.

8.    Circuit de sécurité selon l'une quelconque des revendications 3 à 7, caractérisé en ce qu'un étage final (29) pour l'alimentation appropriée en courant est prévu en amont du moteur électrique (3), et est associé au premier circuit d'évaluation et de commande (9).

9.    Circuit de sécurité selon l'une quelconque des revendications 3 à 8, caractérisé en ce que les deux étages de séparation (25, 43) sont branchés entre l'étage final (29) et le moteur électrique (3).

10.    Circuit de sécurité selon l'une quelconque des revendications 3 à 9, caractérisé en ce que le circuit de combinaison comprend un bus de données entre les deux circuits d'évaluation et de commande (9, 11).

11.    Circuit de sécurité selon l'une quelconque des revendications 3 à 10, caractérisé en ce que les deux circuits d'évaluation et de commande (9, 11) sont reliés l'un à l'autre par un interface, de préférence un interface série (49, 51).

12.    Circuit de sécurité selon la revendication 11, caractérisé en ce que chaque valeur instantanée des couples de rotation déterminées indépendamment l'une de l'autre peuvent être échangées entre les deux circuits d'évaluation de commande (9, 11) par l'intermédiaire de la liaison bus ou de l'interface (49, 51).

Fig. 1

Fig. 2

Fig. 3